(19) Europäisches Patentamt
European Patent Office
Office européen des brevets

(11) Veröffentlichungsnummer: **0 290 384 B1**

# (12) EUROPÄISCHE PATENTSCHRIFT

(45) Veröffentlichungstag der Patentschrift: **16.12.92**

(51) Int. Cl.$^5$: **C09B 43/16**, D06P 1/39, C09D 11/00, D21H 11/06

(21) Anmeldenummer: **88810249.8**

(22) Anmeldetag: **19.04.88**

## (54) Anionische Disazofarbstoffe.

(30) Priorität: **27.04.87 CH 1595/87**

(43) Veröffentlichungstag der Anmeldung:
**09.11.88 Patentblatt 88/45**

(45) Bekanntmachung des Hinweises auf die Patenterteilung:
**16.12.92 Patentblatt 92/51**

(84) Benannte Vertragsstaaten:
**BE CH DE FR GB IT LI**

(56) Entgegenhaltungen:
**DE-A- 2 062 163**
**FR-A- 2 309 604**
**JP-A- 6 157 650**
**US-A- 2 722 527**

(73) Patentinhaber: **CIBA-GEIGY AG**
**Klybeckstrasse 141**
**CH-4002 Basel(CH)**

(72) Erfinder: **Adam, Jean-Marie, Dr.**
**Rue de Village Neuf 60 D**
**F-68300 Rosenau(FR)**
Erfinder: **Käser, Adolf, Dr.**
**Spitzackerstrasse 118**
**CH-4103 Bottmingen(CH)**

EP 0 290 384 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind anionische Disazofarbstoffe der Formel

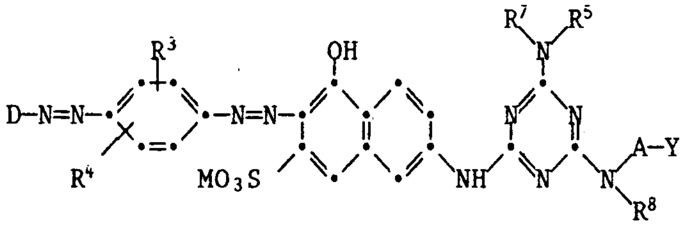

(1)

worin

D einen Rest der Formel

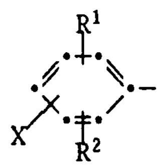

oder

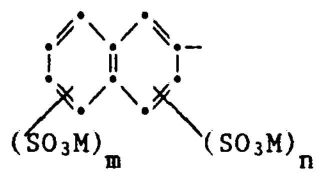

(a) (b)

X -COOM oder $-SO_3M$,

$R^1$ und $R^2$ jeweils unabhängig voneinander Wasserstoff, Halogen, Alkyl oder Alkoxy mit jeweils 1 bis 4 C-Atomen in den Alkylresten bedeuten,

m für 0, 1 oder 2,

n für 0 oder 1 und

m + n für 1 oder 2 stehen, wobei zwei sich am gleichen Ring befindliche Sulfogruppen nicht orthoständig zueinander sind,

$R^3$ Wasserstoff, Alkyl oder Alkoxy mit jeweils 1 bis 4 C-Atomen in den Alkylresten,

$R^4$ Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind,

$R^5$ Wasserstoff, einen Rest

$$-(\underset{R^6}{C}H\underset{R^6}{C}HO)_p-\underset{R^{10}}{C}H_2\underset{R^{10}}{C}HOR^9 \quad \text{oder} \quad -\underset{R^6}{C}H-CH_2-NH_2,$$

$R^6$ und $R^{10}$ unabhängig voneinander jeweils Wasserstoff oder Alkyl mit 1 oder 2 C-Atomen, wobei jedoch ein Rest $R^6$ und ein Rest $R^{10}$ Wasserstoff sein müssen,

$R^7$ Wasserstoff, Alkyl mit 1 bis 6 C-Atomen oder einen Rest

$$-(\underset{R^6}{C}H\underset{R^6}{C}HO)_q-\underset{R^{10}}{C}H\underset{R^{10}}{C}HOR^9 ,$$

oder

$R^5$ und $R_7$ zusammen mit dem sie verbindenden N-Atom einen Pyrrolidin-, Piperidin-, Morpholin- oder einen Piperazinrest, der gegebenenfalls am nicht mit dem Triazinring verbundenen N-Atom durch $C_1$-$C_4$-Alkyl oder -Hydroxyalkyl oder $C_1$-$C_4$-Alkoxy-$C_1$-$C_4$-alkyl substituiert ist,

$R^8$ Wasserstoff, $C_1$-$C_4$-Alkyl oder -Hydroxyalkyl oder $C_1$-$C_4$-Alkoxy-$C_1$-$C_4$-alkyl,
$R^9$ Wasserstoff oder $C_1$-$C_4$-Alkyl,
A eine direkte Bindung oder einen geradkettigen oder verzweigten $C_1$-$C_6$-Alkylenrest,
Y Phenyl oder Naphthyl, wobei die Phenyl- und Naphthylgruppen unsubstituiert sind oder durch Sulfo, Carboxy, Halogen, $C_1$-$C_4$-Alkyl, $C_1$-$C_4$-Alkoxy, $C_1$-$C_4$-Alkylcarbonylamino, $C_1$-$C_4$-Alkyloxycarbonyl oder Hydroxy-$C_1$-$C_4$-Alkyloxycarbonyl substituiert sind,
p und q jeweils unabhängig voneinander 0 oder eine ganze Zahl bis maximal 3 und
M Wasserstoff oder ein Aequivalent eines farblosen Kations

bedeuten.

X in dem Rest der Formel (a) bedeutet vorzugsweise die Sulfogruppe.

Steht in Verbindungen der Formel (1) $R^1$ bzw. $R^2$ in der Bedeutung von Halogen, so bedeutet dieses beispielsweise Chlor oder Brom und vorzugsweise Chlor. $R^1$ bzw. $R^2$ als Alkyl bedeutet z.B. Methyl, Ethyl, n-Propyl, iso-Propyl, n-Butyl oder tert.-Butyl; $R^1$ bzw. $R^2$ als Alkoxy steht z.B. für Methoxy, Ethoxy oder Butoxy.

Bevorzugt bedeutet $R^1$ Wasserstoff, Chlor, Methyl, Methoxy oder Ethoxy, insbesondere Wasserstoff, Methyl oder Methoxy und ganz besonders bevorzugt Wasserstoff oder Methyl.

$R^2$ steht bevorzugt für Wasserstoff, Chlor oder Methyl, insbesondere bevorzugt für Wasserstoff oder Methyl und ganz besonders bevorzugt für Wasserstoff.

Bedeuten $R^1$ und $R^2$ Wasserstoff, so kann sich der Rest X in ortho-, meta-oder para-Position zur Azogruppe befinden.

Liegt neben dem Rest X ein weiterer Substituent vor, so sind der Rest X und der Substituent $R^1$ bzw. $R^2$ bevorzugt meta-ständig zueinander, und zwar vorzugsweise in den Stellungen 2 und 4 zur Azogruppe. Ebenso bevorzugt befindet sich der Rest X in 3- bzw. 5-oder 4-Stellung zur Azogruppe und der Rest $R^1$ bzw. $R^2$ ortho- oder para-ständig zum Rest X, d.h. die Reste X und $R^1$ bzw. $R^2$ befinden sich bevorzugt in 2,5- oder 3,4-Stellung zur Azogruppe.

Liegen neben dem Rest X zwei weitere Substituenten vor, so befindet sich der Rest X vorzugsweise in Stellung 4 oder 5 und die beiden Reste $R^1$ und $R^2$ in den Stellungen 2,5 bzw. 2,4 zur Azogruppe.

Bedeutet D einen Rest der Formel (b), so können in diesem zwei sich am gleichen Ring befindliche Sulfogruppen nicht ortho-ständig zueinander sein. Liegt in dem Rest der Formel (b) eine Sulfogruppe vor, so befindet sich diese beispielsweise in den Stellungen 5, 6, 7 oder 8, wobei die Stellungen 5 und 6 bevorzugt sind. Ist der Rest der Formel (b) durch zwei Sulfogruppen substituiert, so befinden sich diese beispielsweise in den Positionen 3,6; 3,7; 4,8; 5,7 oder 6,8, wovon die Positionen 3,6; 4,8 und 6,8 bevorzugt sind.

Bevorzugt steht D für einen Rest der Formel (a).

Bedeuten $R^3$ und/oder $R^4$ Alkyl- oder Alkoxygruppen, so handelt es sich z.B. um die bei $R^1$ und $R^2$ aufgezählten Gruppen. Vorzugsweise bedeuten $R^3$ und $R^4$ unabhängig voneinander jeweils Wasserstoff, Methyl, Methoxy oder Ethoxy und insbesondere jeweils Wasserstoff.

$R^5$ bedeutet vorzugsweise einen Rest $-CH_2-CH_2-OH$ oder vor allem Wasserstoff.

Die bevorzugten Bedeutungen von $R^6$, $R^9$ und $R^{10}$ sind unabhängig voneinander jeweils Methyl oder vor allem Wasserstoff.

p und q bedeuten vorzugsweise jeweils 1 und insbesondere 0.

$R^7$ bedeutet vorzugsweise Alkyl mit 1 oder 2 C-Atomen oder vor allem einen Rest

$$-(\underset{R^6}{CH}-\underset{R^6}{CH}-O)_q-CH_2-\underset{R^6}{CH}-OH,$$

wobei q 1 oder vor allem 0 und $R^6$ Methyl oder vor allem Wasserstoff ist. Die besonders bevorzutgte Bedeutung von $R^7$ ist ein Rest $-CH_2-CH_2-OH$.

$R^5$ und $R^7$ können auch zusammen mit dem sie verbindenden N-Atom einen Pyrrolidin-, Piperidin-, Morpholin- oder Piperazinrest bilden. Dieser kann am nicht mit dem Triazinring verbundenen N-Atom durch $C_1$-$C_4$-Alkyl oder Hydroxy-$C_1$-$C_4$-Alkyl substituiert sein. Der bevorzugte Substituent ist Hydroxyethyl.

$R^8$ bedeutet vorzugsweise Wasserstoff, Methyl, Ethyl oder Hydroxyethyl, wobei Wasserstoff besonders bevorzugt ist.

Falls A einen geradkettigen oder verzweigten $C_1$-$C_6$-Alkylenrest darstellt, so handelt es sich z.B. um Methylen, Ethylen, Ethyliden, Propylen, Trimethylen, Ethylethylen, 1-Methyl-1,3-trimethylen, wobei Methylen und Ethylen bevorzugt sind. Von besonderem Interesse sind jedoch die Verbindungen der Formel (1), bei denen A eine direkte Bindung darstellt, d.h. bei denen der Phenyl- oder Naphthylrest direkt an das N-Atom

gebunden ist.

Geeignete Substituenten für den Phenyl- und Naphthylrest sind z.B. Sulfo, Carboxy, Methyl, Ethyl, Methoxy, Ethoxy, Acetylamino, Ethylcarbonylamino, Chlor, Methoxycarbonyl, Ethoxycarbonyl oder Hydroxyethoxycarbonyl.

Vorzugsweise handelt es sich bei Y um einen Naphthylrest, der eine oder zwei Sulfogruppen trägt, oder um einen unsubstituierten oder durch Sulfo, Carboxy, Chlor, Methyl, Methoxy, Ethoxy, Acetylamino, Ethylcarbonylamino, Ethoxycarbonyl oder Hydroxyethoxycarbonyl substituierten Phenylrest.

Besonders bevorzugt sind Verbindungen der Formel (1), bei denen Y einen unsubstituierten oder durch Methyl, Sulfo oder Carboxy substituierten Phenylrest bedeutet.

M bedeutet Wasserstoff oder ein Aequivalent eines farblosen Kations, beispielsweise Lithium, Natrium, Kalium, Ammonium oder die protonierte Form eines $C_4$-$C_{12}$-Trialkylamins, $C_4$-$C_{12}$-Diamins oder $C_2$-$C_{12}$-Alkanolamins.

Bei M in der Bedeutung eines protonierten $C_4$-$C_{12}$-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes $C_4$-$C_{12}$-Diamin, handelt es sich z.B. um ein Ethylendiamin oder 1,3-Diaminopropan, bei dem eines oder beide N-Atome zusätzlich mit einem oder zwei $C_1$-$C_4$-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar. Beispiele sind: N-Ethylethylendiamin, N,N-Dimethylethylendiamin, N,N′-Dimethylethylendiamin, N,N-Diethylethylendiamin, 3-Dimethylamino-1-propylamin oder 3-Diethylamino-1-propylamin.

Steht M für ein protoniertes $C_2$-$C_{12}$-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, N-(2-Hydroxyethyl)-methylamin, Di-(2-hydroxyethyl)-amin, N-(2-Hydroxyethyl)-dimethylamin, N-(2-Hydroxyethyl)-diethylamin, N,N-Di-(2-hydroxyethyl)-methylamin, N,N-Di-(2-hydroxyethyl)-ethylaminoder Tri-(2-hydroxyethyl)-amin, 2-(2-Aminoethoxy)-ethanol oder Diethylaminopropylamin.

Vorzugsweise hat M die Bedeutung $Na^{\oplus}$, $Li^{\oplus}$ oder protoniertes $C_4$-$C_6$-Alkanolamin, wobei bei den $C_4$-$C_6$-Alkanolaminen Tri-(2-hydroxyethyl)-amin, Di-(2-hydroxyethyl)-amin oder ein Gemisch dieser beiden Amine bevorzugt ist.

Eine besonders bevorzugte Ausführungsform der Erfindung sind die Disazofarbstoffe der Formel

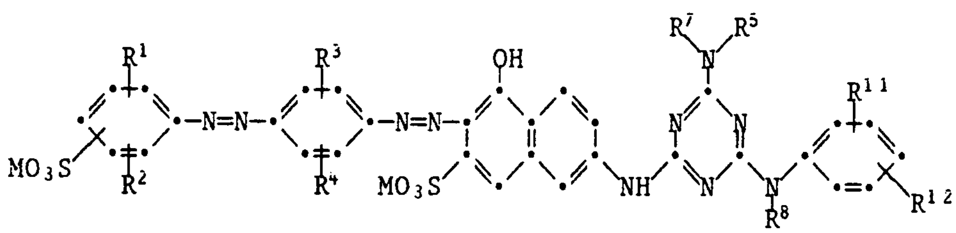 (2)

worin

| | |
|---|---|
| $R^1$ und $R^2$ | jeweils unabhängig voneinander Wasserstoff, Halogen, Alkyl oder Alkoxy mit jeweils 1 bis 4 C-Atomen in den Alkylresten, |
| $R^3$ | Wasserstoff, Alkyl oder Alkoxy mit jeweils 1 bis 4 C-Atomen in den Alkylresten, |
| $R^4$ | Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind, |
| $R^5$ | Wasserstoff, oder einen Rest |

$$-(\underset{R^6}{C}H\underset{R^6}{C}HO)_p-CH_2\underset{R^6}{C}HOR^9 \quad \text{oder} \quad -\underset{R^6}{C}H-CH_2-NH_2,$$

| | |
|---|---|
| $R^6$ | Wasserstoff oder Alkyl mit 1 oder 2 C-Atomen, |
| $R^7$ | Wasserstoff, Alkyl mit 1 bis 6 C-Atomen oder einen Rest |

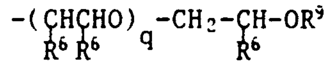

| | |
|---|---|
| $R^8$ | Wasserstoff, $C_1$-$C_4$-Alkyl oder -Hydroxyalkyl, |
| $R^9$ | Wasserstoff oder $C_1$-$C_4$-Alkyl, |
| $R^{11}$ | Wasserstoff, Sulfo oder Carboxy, |
| $R^{12}$ | Wasserstoff, Sulfo, Carboxy, Chlor, Methyl, Methoxy, Ethoxy, Acetylamino, Ethylcarbonylamino, Ethoxycarbonyl oder Hydroxyethoxycarbonyl, |
| p und q | jeweils 0 oder 1 und |
| M | Wasserstoff oder ein Aequivalent eines farblosen Kations |

bedeuten.

Unter diesen sind diejenigen besonders bevorzugt, bei denen $R^1$ Wasserstoff, Methyl oder Methoxy, $R^2$ Wasserstoff oder Methyl, $R^3$ und $R^4$ jeweils unabhängig voneinander Wasserstoff, Methyl, Methoxy oder Ethoxy, $R^5$ Wasserstoff oder Hydroxyethyl, $R^7$ Methyl, Ethyl, Hydroxyethyl oder Hydroxyethoxyethyl, $R^8$ Wasserstoff, Methyl, Ethyl oder Hydroxyethyl, $R^9$ Wasserstoff, $R^{11}$ Wasserstoff, Sulfo oder Carboxy, $R^{12}$ Wasserstoff oder Methyl und M $Na^{\oplus}$, $Li^{\oplus}$ oder protoniertes $C_4$-$C_6$-Alkanolamin bedeuten.

Die Herstellung der Disazofarbstoffe der Formel (1) erfolgt in an sich bekannter Art und Weise, beispielsweise indem man ein Cyanurhalogenid mit einer Verbindung der Formel

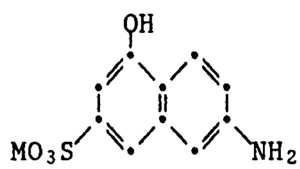

(3)

einer Verbindung der Formel

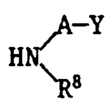

(4)

und einer Verbindung der Formel

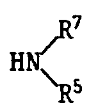

(5)

umsetzt, wobei man entweder die Verbindung (3) oder eines der Umsetzungsprodukte, welches die Verbindung (3) enthält, mit einem diazotierten Amin der Formel

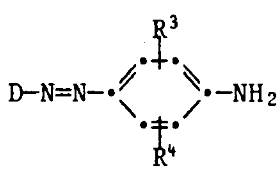

(6)

kuppelt. In den Formeln (3) bis (6) weisen M, A, Y, $R^8$, $R^7$, $R^5$, D, $R^3$ und $R^4$ die unter der Formel (1) angegebene Bedeutung auf.

Die Reihenfolge, in der die Amine (3), (4) und (5) mit dem Cyanurhalogenid umgesetzt werden, ist an sich beliebig, es muss jedoch jeweils so viel von den einzelnen Aminen zugesetzt werden, dass stufenweise

immer nur ein Halogenatom des Cyanurhalogenids ausgetauscht wird. Der dabei aus dem Cyanurhalogenid freigesetzte Halogenwasserstoff muss im allen Fällen gebunden werden, wozu beipsielsweise ein Ueberschuss an der Aminkomponente oder auch die Neutralisation durch Zusatz von Lauge oder von alkalisch hydrolysierbaren Salzen dienen kann.

Die einzelnen Umsetzungsschritte sind beliebig vertauschbar und können nach an sich üblichen Methoden durchgeführt werden.

So erfolgt beispielsweise die Umsetzung des Cyanurhalogenids mit einer Verbindung der Formel (3) als erste Stufe bei schwach sauren Reaktionsbedingungen, vorzugsweise bei pH 5-6, und in einem vorzugsweisen Temperaturbereich von 0-20 ° C.

Die daran anschliessende Umsetzung mit einer Verbindung der Formel (4) erfolgt in einem Temperaturbereich von vorzugsweise 20-60 ° C, bei einem pH-Bereich von etwa 6-8.

Der Ersatz des dritten Halogenatoms durch Umsetzung mit einer Verbindung der Formel (5) erfolgt vorzugsweise in einem Temperaturbereich von etwa 60-100 ° C und bei einem pH-Wert von etwa 8-10.

Auch die Kupplungsreaktion erfolgt auf an sich bekannte Art und Weise, beispielsweise bei einer Temperatur zwischen 0 und 75 ° C, vorzugsweise zwischen 0 und 35 ° C, und bei einem pH-Wert zwischen 5 und 9.

Vorzugsweise setzt man Cyanurchlorid zunächst mit einem Amin der Formel (3), dann mit einem Amin der Formel (4) und schliesslich mit einem Amin der Formel (5) um und kuppelt danach das erhaltene Produkt mit einem diazotierten Amin der Formel (6), wobei alle diese Reaktionen ohne Isolierung der Zwischenstufen durchgeführt werden.

Die Verbindungen der Formeln (3) bis (6) sind bekannt oder können auf bekannte Weise erhalten werden.

Die erhaltenen Verbindungen der Formel (1) können auf an sich bekannte Weise isoliert werden, z.B. durch Aussalzen.

Das farblose Kation M kann ebenfalls durch bekannte Methoden eingeführt werden, z.B. über die Farbsäure, durch Ionenpaarextraktion oder via Membrantechnologie.

Verwendung finden die neuen Verbindungen der Formel (1) vor allem als Farbstoffe zum Färben und Bedrucken von Textilmaterialien, Papier, Leder und zur Bereitung von Tinten.

Dienen die erfindungsgemäßen Azofarbstoffe zum Färben und Bedrucken von Textilmaterialien, so kommen vor allem solche aus Baumwolle in Frage. Die neuen Farbstoffe haben ein gutes Ziehvermögen auf diese Textilmaterialien, einen guten Ausziehgrad und guten Aufbau. Man erhält rote Färbungen, welche gute Echtheiten, vor allem gute Nassechtheiten und Lichtechtheiten aufweisen.

Die bevorzugte Verwendung der erfindungsgemässen Farbstoffe der Formel (1) liegt in der Anwendung zum Färben und Bedrucken von Papier aller Arten, vor allem von gebleichtem und geleimtem ligninfreiem Papier.

Die erfindungsgemässen Farbstoffe ziehen sehr gut auf diese Substrate, wobei das Abwasser - auch bei tiefen Nuancen (bis über 1/1 RT = Richt typtiefe) - praktisch farblos bleibt, was ein eminenter technischer und ökologischer Vorteil ist. Der gute Ausziehgrad ist auch für eine gute Reproduzierbarkeit der Nuance von Vorteil. Die Färbungen sind nassecht, d.h. sie zeigen keine Neigung zum Abluten, wenn gefärbte Papiere in nassem Zustand mit feuchtem weissem Papier in Berührung gebracht wird. Diese Eigenschaft ist besonders für sogenannte "Tissues" erwünscht, bei denen vorhersehbar ist, dass das gefärbte Papier in nassem Zustand (z.B. getränkt mit Wasser, Alkohol, Tensid-Lösung etc.) in Berührung mit anderen Flächen wie Textilien, Papier und dergleichen kommt, die gegen Verschmutzung geschützt werden müssen. Falls gewünscht, kann beim Färben von Papier mit den erfindungsgemässen Farbstoffen zusätzlich ein kationisches Fixiermittel eingesetzt werden.

Die roten Ausfärbungen sind brillant und haben sehr gute Echtheiten, vor allem Lichtechtheit.

Weiter dienen die Farbstoffe der Formel (1) zum Färben von Ledermaterialien nach den verschiedensten Applikationsverfahren, wie Sprühen, Bürsten und Tauchen und zur Bereitung von Tinten aller Art, wie für Kugelschreiber und Drucktinten.

Die FR-A-2 309 604 beschreibt Disazofarbstoffe, die sich von den erfindungsgemässen dadurch unterscheiden, dass sie am Triazinring keinen Rest

$$-\underset{R}{\underset{|}{N}}-A-Y$$

aufweisen, worin A die direkte Bindung oder Alkylen und Y gegebenenfalls substituiertes Phenyl oder Naphthyl bedeutet.

Die folgenden Beispiele veranschaulichen die Erfindung, ohne sie darauf zu limitieren. Die Temperaturen sind in Grad Celsius angegeben, Teile (T) bedeuten Gewichtsteile und %-Angaben sind Gewichtsprozente.

Beispiel 1

19,8 Teile Cyanurchlorid und 24 Teile I-Säure werden in 100 Teilen Eis und 100 Teilen Wasser angeschlämmt, wobei der pH mit 2N-Natronlauge zwischen 2 und 3 gehalten wird. Wenn die Dünnschichtchromatographie kein Ausgangsmaterial mehr zeigt, werden 21 Teile Metanilsäure bei Raumtemperatur zugesetzt und der pH wird mit 2N-Natronlauge zwischen 6 und 7 gehalten. Wenn die Reaktion fertig ist, lässt man noch 7 Teile Ethanolamin bei 80° zutropfen, wobei der pH mit 2N-Natronlauge zwischen 9 und 10 gehalten wird. Man rührt noch 6 Std. bei dieser Temperatur, kühlt auf 0-5° ab und kuppelt mit 27 Teilen diazotierter 4-Amino-1,1'-azobenzol-4'-sulfonsäure. Der pH wird dabei mit 2N-Natronlauge zwischen 6 und 7 gehalten. Anschliessend wird der Farbstoff der Formel

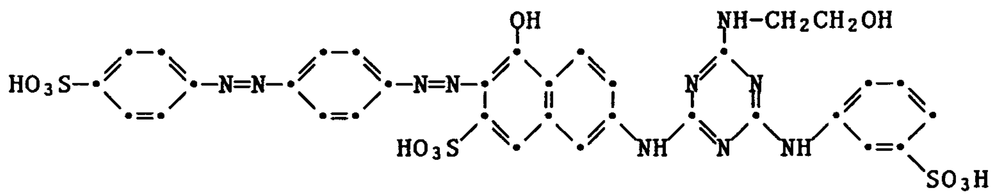

mit NaCl ausgesalzen. Er färbt Papier in blaustichigen roten Tönen. Die färberischen Eigenschaften, wie Lichtechtheit, Ausblutechtheit und Ausziehvermögen auf Papier, sind ausgezeichnet.

Beispiele 2-72

In der folgenden Tabelle sind weitere Disazofarbstoffe aufgeführt, die nach dem vorstehenden Beispiel hergestellt werden können, wobei die Symbole $R_1$, $R_2$, $R_3$ die in der Tabelle 1 angegebene Bedeutung haben. Die damit erhaltenen Färbungen auf Papier sind rot bis blaustichig rot.

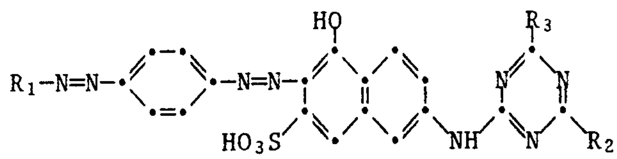

| Bsp. | $R_1$ | $R_3$ | $R_2$ |
|---|---|---|---|
| 2 | 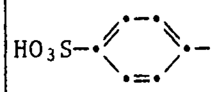 | $-NHCH_2CH_2OH$ | 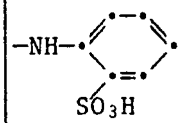 |
| 3 | 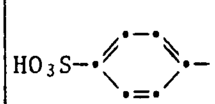 | $-NHCH_2CH_2OH$ | 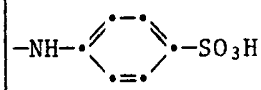 |
| 4 | 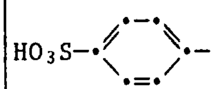 | $-NHCH_2CH_2OH$ | 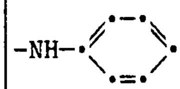 |
| 5 | 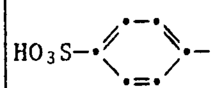 | $-NHCH_2CH_2OH$ | 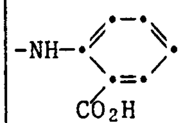 |
| 6 | 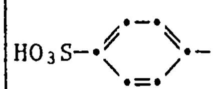 | $-NHCH_2CH_2OH$ | 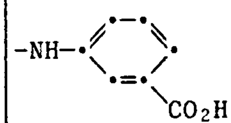 |
| 7 | 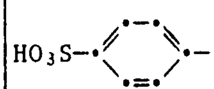 | $-NHCH_2CH_2OH$ | 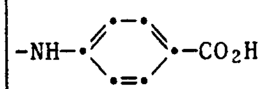 |
| 8 | 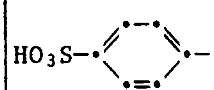 | $-NHCH_2CH_2OH$ | 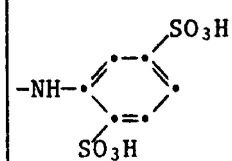 |
| 9 | 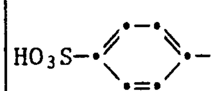 | $-NHCH_2CH_2OH$ | 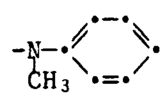 |
| 10 | 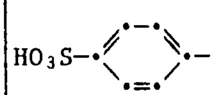 | $-NHCH_2CH_2OH$ | 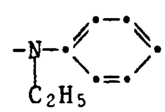 |
| 11 | 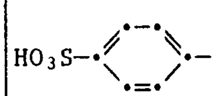 | $-NHCH_2CH_2OH$ | 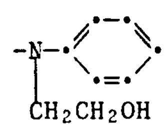 |
| 12 | 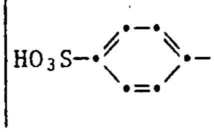 | $-NHCH_2CH_2OH$ | 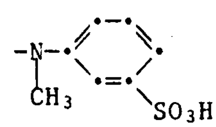 |

| Bsp. | $R_1$ | $R_3$ | $R_2$ |
|---|---|---|---|
| 13 | 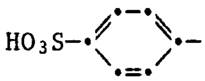 | $-NHCH_2CH_2OH$ | 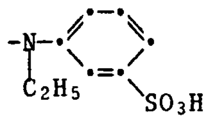 |
| 14 | 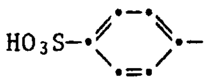 | $-NHCH_2CH_2OH$ | 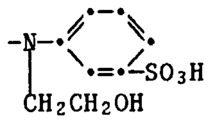 |
| 15 | 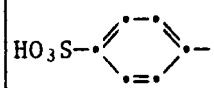 | $-NHCH_2CH_2OH$ | 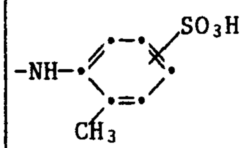 |
| 16 | 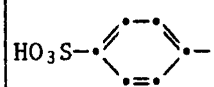 | $-NHCH_2CH_2OH$ | 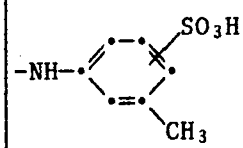 |
| 17 | 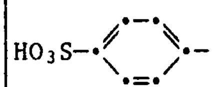 | $-NHCH_2CH_2OH$ | 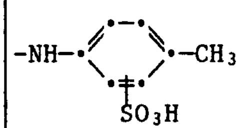 |
| 18 | 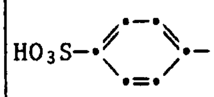 | $-NHCH_2CH_2OH$ | 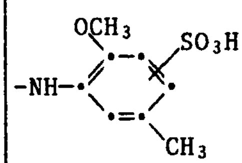 |
| 19 | 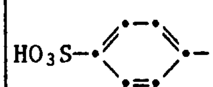 | $-NHCH_2CH_2OH$ | 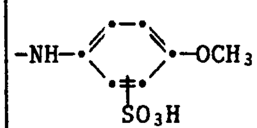 |
| 20 | 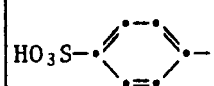 | $-NHCH_2CH_2OH$ | 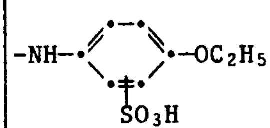 |
| 21 | 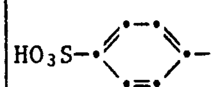 | $-NHCH_2CH_2OH$ | 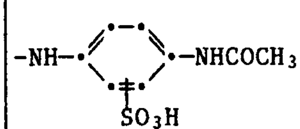 |
| 22 | 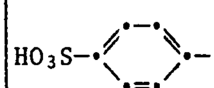 | $-NHCH_2CH_2OH$ | 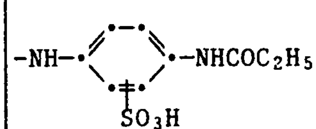 |
| 23 | 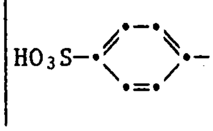 | $-NHCH_2CH_2OH$ | 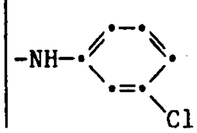 |

| Bsp. | $R_1$ | $R_3$ | $R_2$ |
|---|---|---|---|
| 24 | 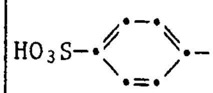 | $-NHCH_2CH_2OH$ | 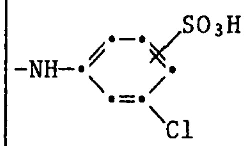 |
| 25 | 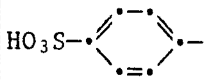 | $-NHCH_2CH_2OH$ | 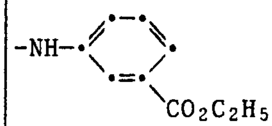 |
| 26 | 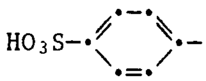 | $-NHCH_2CH_2OH$ | 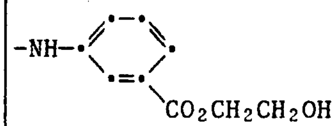 |
| 27 | 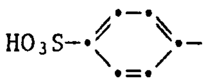 | $-NHCH_2CH_2OH$ | 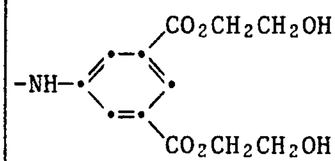 |
| 28 | 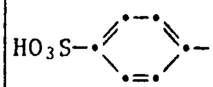 | $-NHCH_2CH_2OH$ | 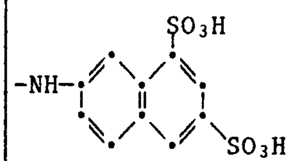 |
| 29 | 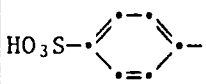 | $-NHCH_2CH_2OH$ | 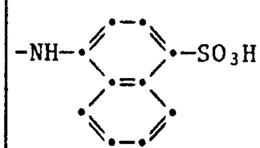 |
| 30 | 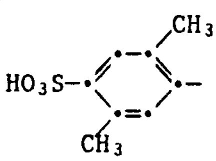 | $-NHCH_2CH_2OH$ | 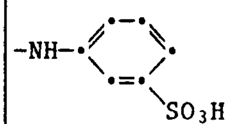 |
| 31 | 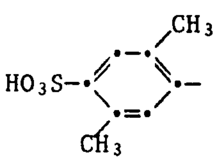 | $-NHCH_2CH_2OH$ | 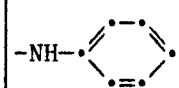 |
| 32 | 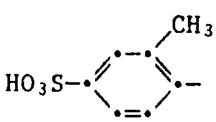 | $-NHCH_2CH_2OH$ | 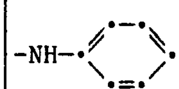 |
| 33 | 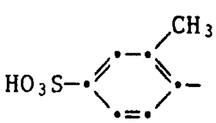 | $-NHCH_2CH_2OH$ | 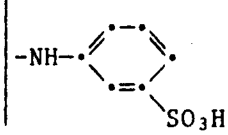 |

| Bsp. | $R_1$ | $R_3$ | $R_2$ |
|---|---|---|---|
| 34 | 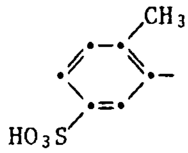 | $-NHCH_2CH_2OH$ | 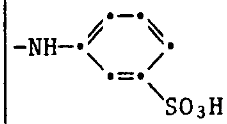 |
| 35 | 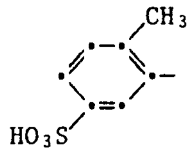 | $-NHCH_2CH_2OH$ | 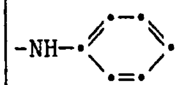 |
| 36 | 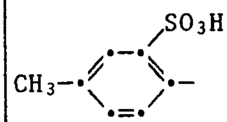 | $-NHCH_2CH_2OH$ | 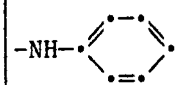 |
| 37 | 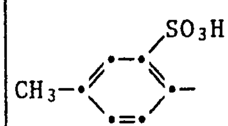 | $-NHCH_2CH_2OH$ | 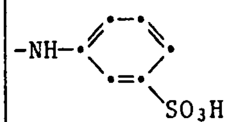 |
| 38 | 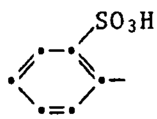 | $-NHCH_2CH_2OH$ | 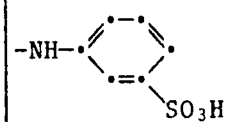 |
| 39 | 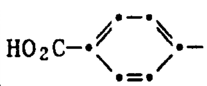 | $-NHCH_2CH_2OH$ | 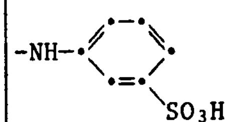 |
| 40 | 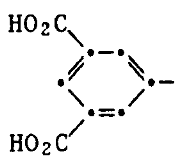 | $-NHCH_2CH_2OH$ | 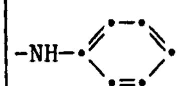 |
| 41 | 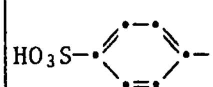 | 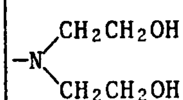 | 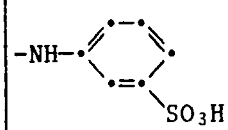 |
| 42 | 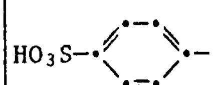 | $-NHCH_2CH_2OCH_2CH_2OH$ | 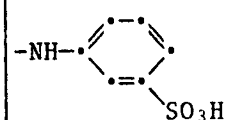 |
| 43 | 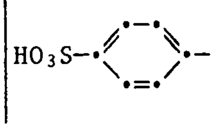 | $-NH_2$ | 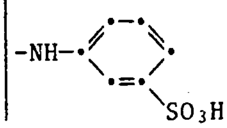 |

| Bsp. | $R_1$ | $R_3$ | $R_2$ |
|---|---|---|---|
| 44 | 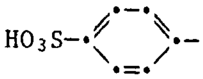 | 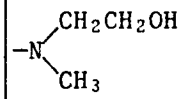 | 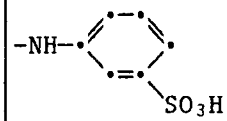 |
| 45 | 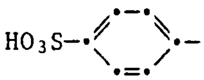 | 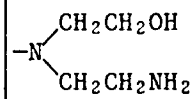 | 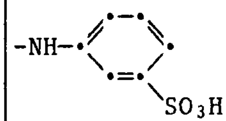 |
| 46 | 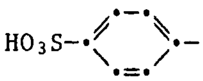 | 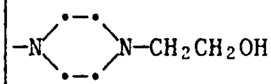 | 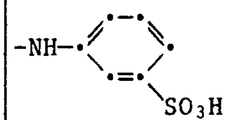 |
| 47 | 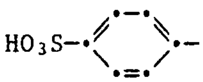 | $-NHCH_3$ | 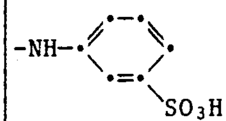 |
| 48 | 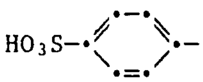 | $-NH-C_2H_5$ | 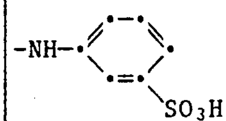 |
| 49 | 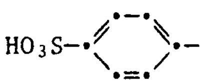 | 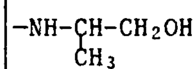 | 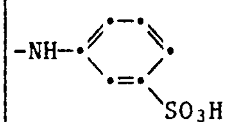 |
| 50 | 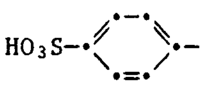 | $-NH-CH_2CH_2OH$ | 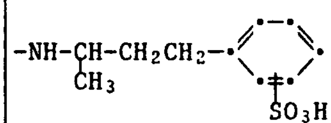 |
| 51 | 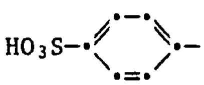 | $-NH-CH_2CH_2OH$ | 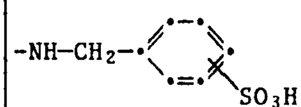 |
| 52 | 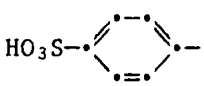 | 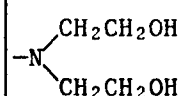 | 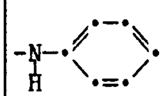 |
| 53 | 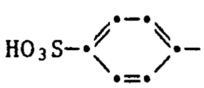 | 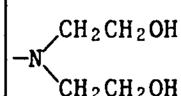 | 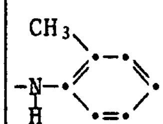 |
| 54 | 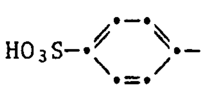 | 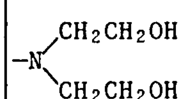 | 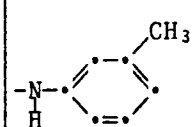 |
| 55 | 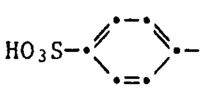 | 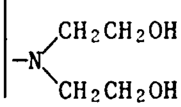 | 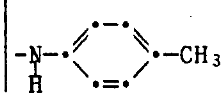 |

| Bsp. | $R_1$ | $R_3$ | $R_2$ |
|---|---|---|---|
| 56 | 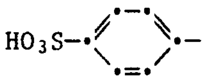 | 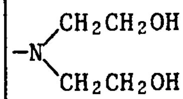 | 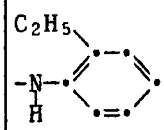 |
| 57 | 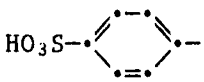 | 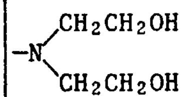 | 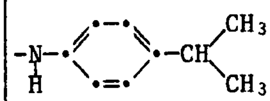 |
| 58 | 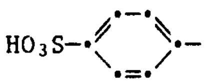 | 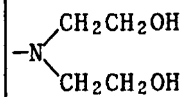 | 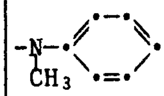 |
| 59 | 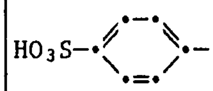 | 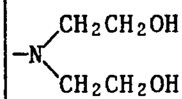 | 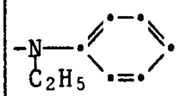 |
| 60 | 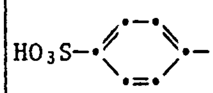 | 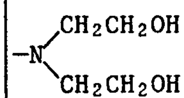 | 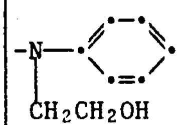 |
| 61 | 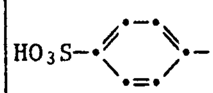 | 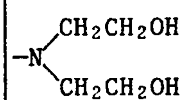 | 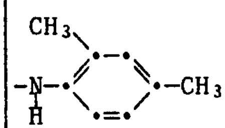 |
| 62 | 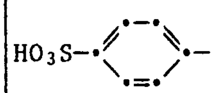 | 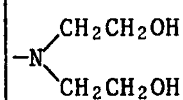 | 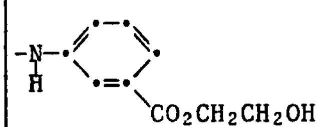 |
| 63 | 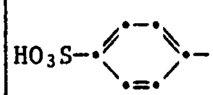 | 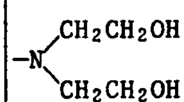 | 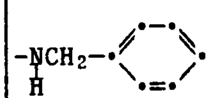 |
| 64 | 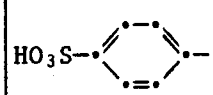 | 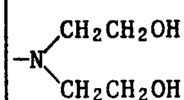 | 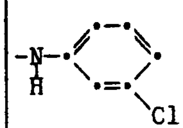 |
| 65 | 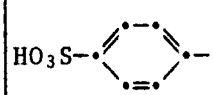 | 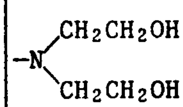 | 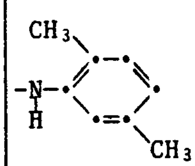 |
| 66 | 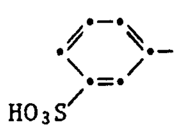 | $-NHCH_2CH_2OH$ | 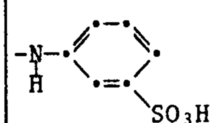 |
| 67 | 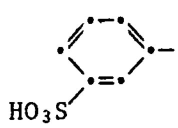 | $-NHCH_2CH_2OH$ | 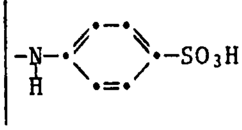 |

| Bsp. | $R_1$ | $R_3$ | $R_2$ |
|---|---|---|---|
| 68 | 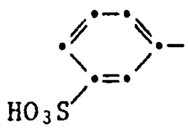 | $-NHCH_2CH_2OH$ | 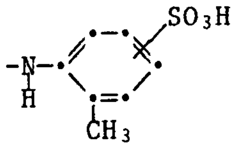 |
| 69 | 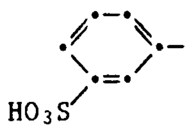 | $-NHCH_2CH_2OH$ | 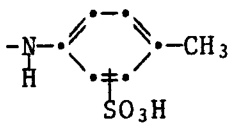 |
| 70 | 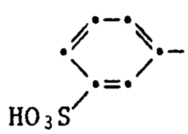 | 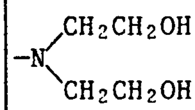 | 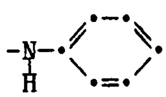 |
| 71 | 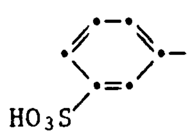 | 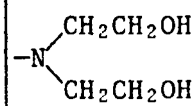 | 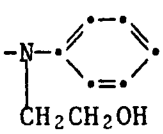 |
| 72 | 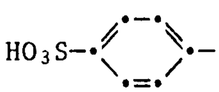 | 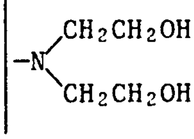 | 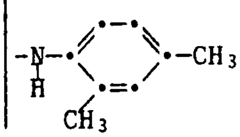 |

Beispiel 73:

200 Teile des Farbstoffes aus Beispiel 1 werden in Form der salzarmen freien Farbstoffsäure in 500 Teilen Wasser homogen verrührt und durch Zugabe von 58 Teilen Diethanolamin und 100 Teilen Harnstoff bei 40° gelöst. Die Lösung wird unter Zusatz eines Filterhilfsmittels klärfiltriert. Das Filtrat lässt man auf Raumtemperatur abkühlen und stellt es mit Wasser auf 1000 Teile ein. Man erhält eine stabile Farbstofflösung, welche eine flüssige Handelsform darstellt.

Anstelle von Diethanolamin können auch Monoethanolamin, Triethanolamin, 2-(2-Aminoethoxy)-ethanol, Polyglykolamine wie sie in der DE-A-2 061 760 beschrieben sind, Ammoniak, Tetramethylammoniumhydroxid, Lithiumhydroxid oder Lithiumcarbonat eingesetzt werden.

Beispiel 74

In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 73 beschriebenen Farbstofflösung. Nach 20 Minuten Mischzeit wird aus dieser Masse Papier hergestellt. Das auf diese Weise erhaltene saugfähige Papier ist rot gefärbt. Das Abwasser ist praktisch farblos.

Beispiel 75

0,5 Teile des Farbstoffpulvers aus Beispiel 1 werden in 100 Teilen heissem Wasser gelöst und die Lösung gibt man zu 100 Teilen chemisch gebleichter Sulfitzellulose, die mit 2000 Teilen Wasser in einem Holländer gemahlen wurden. Nach 15 Minuten Durchmischung wird auf übliche Art mit Harzleim und Aluminiumsulfat geleimt. Papier, das aus diesem Stoff hergestellt wird, besitzt eine rote Nuance von mittlerer Intensität mit guten Nassechtheiten.

**Patentansprüche**

**1.** Diazofarbstoffe der Formel

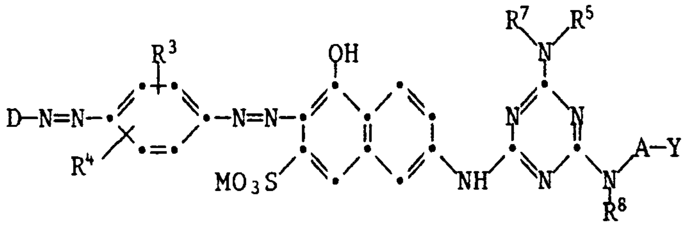

(1)

worin

D einen Rest der Formel

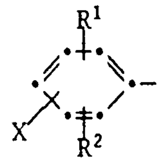

oder

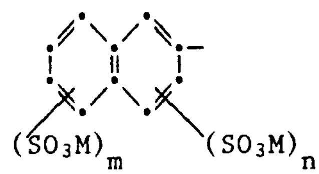

,

(a) (b)

X -COOM oder -$SO_3M$,

$R^1$ und $R^2$ jeweils unabhängig voneinander Wasserstoff, Halogen, Alkyl oder Alkoxy mit jeweils 1 bis 4 C-Atomen in den Alkylresten bedeuten,

m für 0, 1 oder 2,

n für 0 oder 1 und

m + n für 1 oder 2 stehen, wobei zwei sich am gleichen Ring befindliche Sulfogruppen nicht orthoständig zueinander sind,

$R^3$ Wasserstoff, Alkyl oder Alkoxy mit jeweils 1 bis 4 C-Atomen in den Alkylresten,

$R^4$ Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind,

$R^5$ Wasserstoff, einen Rest

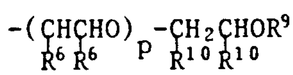

oder

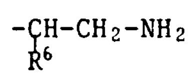

,

$R^6$ und $R^{10}$ unabhängig voneinander jeweils Wasserstoff oder Alkyl mit 1 oder 2 C-Atomen, wobei jedoch ein Rest $R^6$ und ein Rest $R^{10}$ Wasserstoff sein müssen,

$R^7$ Wasserstoff, Alkyl mit 1 bis 6 C-Atomen oder einen Rest

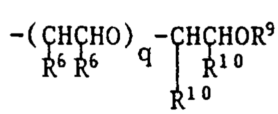

,

oder

$R^5$ und $R_7$ zusammen mit dem sie verbindenden N-Atom einen Pyrrolidin-, Piperidin-, Morpholin- oder einen Piperazinrest, der gegebenenfalls am nicht mit dem Triazinring verbundenen N-Atom durch $C_1$-$C_4$-Alkyl oder -Hydroxyalkyl oder $C_1$-$C_4$-Alkoxy-$C_1$-$C_4$-alkyl substituiert ist,

$R^8$ Wasserstoff, $C_1$-$C_4$-Alkyl oder -Hydroxyalkyl oder $C_1$-$C_4$-Alkoxy-$C_1$-$C_4$-alkyl,

| | |
|---|---|
| $R^9$ | Wasserstoff oder $C_1$-$C_4$-Alkyl, |
| A | eine direkte Bindung oder einen geradkettigen oder verzweigten $C_1$-$C_6$-Alkylenrest, |
| Y | Phenyl oder Naphthyl, wobei die Phenyl- und Naphthylgruppen unsubstituiert sind oder durch Sulfo, Carboxy, Halogen, $C_1$-$C_4$-Alkyl, $C_1$-$C_4$-Alkoxy, $C_1$-$C_4$-Alkylcarbonylamino, $C_1$-$C_4$-Alkyloxycarbonyl oder Hydroxy-$C_1$-$C_4$-Alkyloxycarbonyl substituiert sind, |
| p und q | jeweils unabhängig voneinander 0 oder eine ganze Zahl bis maximal 3 und |
| M | Wasserstoff oder ein Aequivalent eines farblosen Kations |

bedeuten.

**2.** Farbstoffe gemäss Anspruch 1, dadurch gekennzeichnet, dass D einen Rest der Formel (a) bedeutet.

**3.** Farbstoffe gemäss Anspruch 2, dadurch gekennzeichnet, dass $R^1$ Wasserstoff, Chlor, Methyl, Methoxy oder Ethoxy bedeutet.

**4.** Farbstoffe gemäss Anspruch 3, dadurch gekennzeichnet, dass $R^1$ Wasserstoff, Methyl oder Methoxy bedeutet.

**5.** Farbstoffe gemäss einem der Ansprüche 1-4, dadurch gekennzeichnet, dass $R^7$ Wasserstoff, Chlor oder Methyl bedeutet.

**6.** Farbstoffe gemäss einem der Ansprüche 1-5, dadurch gekennzeichnet, dass X Sulfo bedeutet.

**7.** Farbstoffe gemäss einem der Ansprüche 1-6, dadurch gekennzeichnet, dass $R^3$ und $R^4$ unabhängig voneinander je Wasserstoff, Methyl, Methoxy oder Ethoxy, vor allem Wasserstoff bedeuten.

**8.** Farbstoffe gemäss einem der Ansprüche 1-7, dadurch gekennzeichnet, dass $R^5$ $-CH_2-CH_2-OH$ oder Wasserstoff bedeutet.

**9.** Farbstoffe gemäss einem der Ansprüche 1-8, dadurch gekennzeichnet, dass $R^7$ $C_1$-$C_2$-Alkyl, Wasserstoff oder einen Rest

$$-(\underset{R^6}{\underset{|}{CH}}-\underset{R^6}{\underset{|}{CH}}-O)_q-CH_2-\underset{R^6}{\underset{|}{CH}}-OH$$

bedeutet, worin q 1 oder vor allem 0 und $R^6$ Methyl oder vor allem Wasserstoff bedeutet.

**10.** Farbstoffe gemäss einem der Ansprüche 1-9, worin $R^8$ Wasserstoff, Methyl, Ethyl oder Hydroxyethyl bedeutet.

**11.** Farbstoffe gemäss einem der Ansprüche 1-10, dadurch gekennzeichnet, dass A Methylen oder Ethylen bedeutet.

**12.** Farbstoffe gemäss einem der Ansprüche 1-10, dadurch gekennzeichnet, dass A die direkte Bindung bedeutet.

**13.** Farbstoffe gemäss einem der Ansprüche 1-12, dadurch gekennzeichnet, dass Y einen Naphthylrest, der eine oder zwei Sulfogruppen trägt, oder einen unsubstituierten oder durch Sulfo, Carboxy, Chlor, Methyl, Methoxy, Ethoxy, Acetylamino, Ethylcarbonylamino, Ethoxycarbonyl oder Hydroxyethoxycarbonylamino substituierten Phenylrest darstellt.

**14.** Farbstoffe gemäss Anspruch 13, dadurch gekennzeichnet, dass Y einen unsubstituierten oder durch Methyl, Sulfo oder Carboxy substituierten Phenylrest bedeutet.

**15.** Farbstoffe gemäss einem der Ansprüche 1-14, dadurch gekennzeichnet, dass M $Na^{\oplus}$, $Li^{\oplus}$ oder protoniertes $C_4$-$C_6$-Alkanolamin bedeutet.

**16.** Farbstoffe gemäss Anspruch 1 der Formel

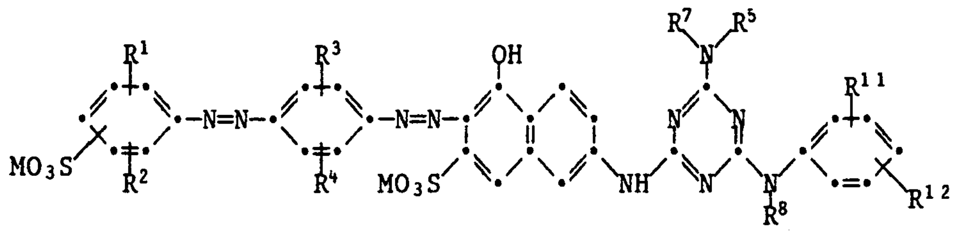

(2)

worin

| | |
|---|---|
| $R^1$ und $R^2$ | jeweils unabhängig voneinander Wasserstoff, Halogen, Alkyl oder Alkoxy mit jeweils 1 bis 4 C-Atomen in den Alkylresten, |
| $R^3$ | Wasserstoff, Alkyl oder Alkoxy mit jeweils 1 bis 4 C-Atomen in den Alkylresten, |
| $R^4$ | Wasserstoff oder Alkyl mit 1 bis 4 C-Atomen, wobei die beiden Reste $R^3$ und $R^4$, wenn diese eine andere Bedeutung als Wasserstoff haben, paraständig zueinander sind, |
| $R^5$ | Wasserstoff, oder einen Rest |

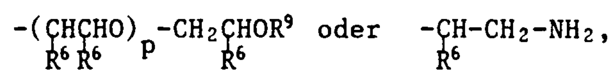

| | |
|---|---|
| $R^6$ | Wasserstoff oder Alkyl mit 1 oder 2 C-Atomen, |
| $R^7$ | Wasserstoff, Alkyl mit 1 bis 6 C-Atomen oder einen Rest |

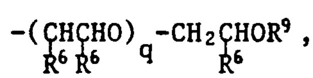

| | |
|---|---|
| $R^8$ | Wasserstoff, $C_1$-$C_4$-Alkyl oder -Hydroxyalkyl, |
| $R^9$ | Wasserstoff oder $C_1$-$C_4$-Alkyl, |
| $R^{11}$ | Wasserstoff, Sulfo oder Carboxy, |
| $R^{12}$ | Wasserstoff, Sulfo, Carboxy, Chlor, Methyl, Methoxy, Ethoxy, Acetylamino, Ethylcarbonylamino, Ethoxycarbonyl oder Hydroxyethoxycarbonyl, |
| p und q | jeweils 0 oder 1 und |
| M | Wasserstoff oder ein Aequivalent eines farblosen Kations |

bedeuten.

**17.** Farbstoffe gemäss Anspruch 16, dadurch gekennzeichnet, dass $R^1$ Wasserstoff, Methyl oder Methoxy, $R^2$ Wasserstoff oder Methyl, $R^3$ und $R^4$ jeweils unabhängig voneinander Wasserstoff, Methyl, Methoxy oder Ethoxy, $R^5$ Wasserstoff oder Hydroxyethyl, $R^7$ Methyl, Ethyl, Hydroxyethyl oder Hydroxyethoxyethyl, $R^8$ Wasserstoff, Methyl, Ethyl oder Hydroxyethyl, $R^9$ Wasserstoff, $R^{11}$ Wasserstoff, Sulfo oder Carboxy, $R^{12}$ Wasserstoff oder Methyl und M $Na^{\oplus}$, $Li^{\oplus}$ oder protoniertes $C_4$-$C_6$-Alkanolamin bedeuten.

**18.** Verfahren zur Herstellung von Disazofarbstoffen der Formel (1) gemäss Anspruch 1, dadurch gekennzeichnet, dass man ein Cyanurhalogenid mit einer Verbindung der Formel

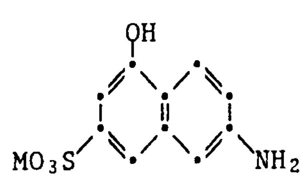

(3)

einer Verbindung der Formel

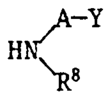

(4)

und einer Verbindung der Formel

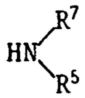

(5)

umsetzt, wobei man entweder die Verbindung (3) oder eines der Umsetzungsprodukte, welches die Verbindung (3) enthält, mit einem diazotierten Amin der Formel

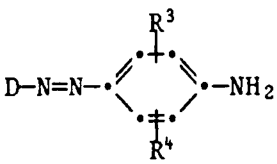

(6)

kuppelt, wobei M, A, Y, $R^8$, $R^7$, $R^5$, D, $R^3$ und $R^4$ die unter der Formel (1) angegebene Bedeutung aufweisen.

**19.** Verfahren gemäss Anspruch 18, dadurch gekennzeichnet, dass man Cyanurchlorid zunächst mit einem Amin der Formel (3), dann mit einem Amin der Formel (4) und schliesslich mit einem Amin der Formel (5) umsetzt und danach das erhaltene Produkt mit einem diazotierten Amin der Formel (6) kuppelt, wobei alle diese Reaktionen ohne Isolierung der Zwischenstufen durchgeführt werden.

**20.** Verwendung der Verbindungen der Formel (1) gemäss Anspruch 1 als Farbstoffe zum Färben und Bedrucken von Textilmaterialien, Papier, Leder und zur Bereitung von Tinten.

**21.** Verwendung gemäss Anspruch 20 zum Färben und Bedrucken von Papier aller Arten.

**22.** Das mit Farbstoffen der Formel (1) gemäss Anspruch 1 gefarbte Papier.

**Claims**

**1.** A disazo dye of formula

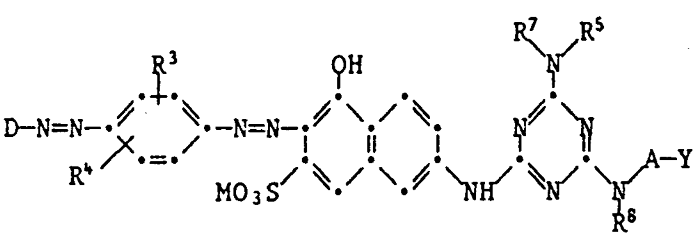

(1)

wherein D is a radical of formula

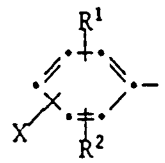 or 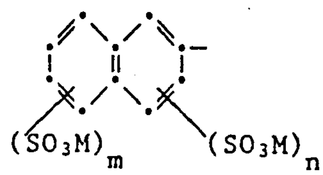

(a) (b)

| | |
|---|---|
| X | is -COOM or $-SO_3M$, |
| $R^1$ and $R^2$ | are each independently of the other hydrogen, halogen, alkyl or alkoxy each having 1 to 4 carbon atoms in the alkyl radicals, |
| m | is 0, 1 or 2, |
| n | is 0 or 1, and |
| m + n | are 1 or 2, two sulfo groups present on the same ring not being ortho to each other, |
| $R^3$ | is hydrogen, alkyl or alkoxy each having 1 to 4 carbon atoms in the alkyl radicals, |
| $R^4$ | is hydrogen or alkyl having 1 to 4 carbon atoms, the two radicals $R^3$ and $R^4$ being para to each other if they have a meaning other than hydrogen, |
| $R^5$ | is hydrogen or a radical |

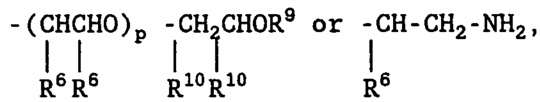

| | |
|---|---|
| $R^6$ and $R^{10}$ | are each independently of the other hydrogen or alkyl having 1 or 2 carbon atoms, but with one radical $R^6$ and one radical $R^{10}$ necessarily being hydrogen, |
| $R^7$ | is hydrogen, alkyl having 1 to 6 carbon atoms or a radical |

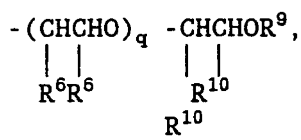

| | |
|---|---|
| | or |
| $R^5$ and $R^7$, | together with the nitrogen atom linking them, are a pyrrolidine, piperidine or morpholine radical or a piperazine radical which is unsubstituted or substituted by $C_1$-$C_4$alkyl or $C_1$-$C_4$hydroxyalkyl or $C_1$-$C_4$alkoxy-$C_1$-$C_4$alkyl at the nitrogen atom which is not attached to the triazine ring, |
| $R^8$ | is hydrogen, $C_1$-$C_4$alkyl or $C_1$-$C_4$hydroxyalkyl or $C_1$-$C_4$alkoxy-$C_1$-$C_4$-alkyl, |
| $R^9$ | is hydrogen or $C_1$-$C_4$alkyl, |
| A | is a direct bond or a straight-chain or branched $C_1$-$C_6$alkylene radical, |
| Y | is phenyl or naphthyl, the phenyl and naphthyl groups being unsubstituted or substituted by sulfo, carboxyl, halogen, $C_1$-$C_4$alkyl, $C_1$-$C_4$alkoxy, $C_1$-$C_4$alkylcarbonylamino, $C_1$-$C_4$alkoxycarbonyl or hydroxy-$C_1$-$C_4$alkoxycarbonyl, |
| p and q | are each independently of the other 0 or a whole number not greater than 3, and |
| M | is hydrogen or one equivalent of a colourless cation. |

**2.** A dye according to claim 1, wherein D is a radical of formula (a).

**3.** A dye according to claim 2, wherein $R^1$ is hydrogen, chlorine, methyl, methoxy or ethoxy.

**4.** A dye according to claim 3, wherein $R^1$ is hydrogen, methyl or methoxy.

**5.** A dye according to any one of claims 1 to 4, wherein $R^2$ is hydrogen, chlorine or methyl.

6. A dye according to any one of claims 1 to 5, wherein X is sulfo.

7. A dye according to any one of claims 1 to 6, wherein $R^3$ and $R^4$ are each independently of the other hydrogen, methyl, methoxy or ethoxy and are preferably hydrogen.

8. A dye according to any one of claims 1 to 7, wherein $R^5$ is $-CH_2-CH_2-OH$ or hydrogen.

9. A dye according to any one of claims 1 to 8, wherein $R^7$ is $C_1$-$C_2$alkyl, hydrogen or a radical

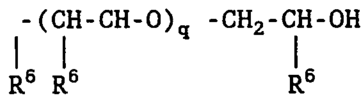

in which q is 1 or, preferably 0, and
$R^6$ is methyl or, preferably, hydrogen.

10. A dye according to any one of claims 1 to 9, wherein $R^8$ is hydrogen, methyl, ethyl or hydroxyethyl.

11. A dye according to any one of claims 1 to 10, wherein A is methylene or ethylene.

12. A dye according to any one of claims 1 to 10, wherein A is a direct bond.

13. A dye according to any one of claims 1 to 12, wherein Y is a naphthyl radical which carries one or two sulfo groups, or is an unsubstituted phenyl radical or a phenyl radical which is substituted by sulfo, carboxyl, chlorine, methyl, methoxy, ethoxy, acetylamino, ethylcarbonylamino, ethoxycarbonyl or hydroxyethoxycarbonylamino.

14. A dye according to claim 13, wherein Y is an unsubstituted phenyl radical or a phenyl radical which is substituted by methyl, sulfo or carboxyl.

15. A dye according to any one of claims 1 to 14, wherein M is $Na^{\oplus}$, $Li^{\oplus}$ or protonated $C_4$-$C_6$alkanolamine.

16. A dye according to claim 1 of formula

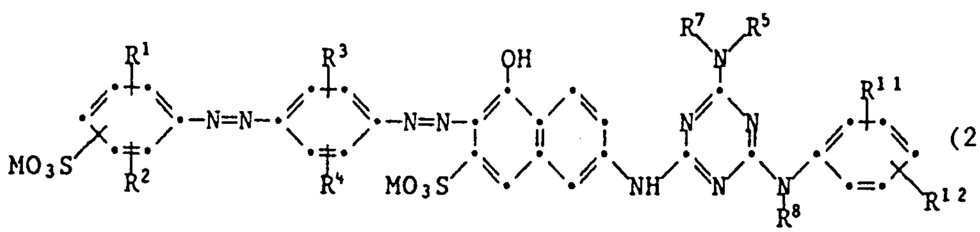

(2)

wherein
$R^1$ and $R^2$ are each independently of the other hydrogen, halogen, alkyl or alkoxy each having 1 to 4 carbon atoms in the alkyl radicals,
$R^3$ is hydrogen, alkyl or alkoxy each having 1 to 4 carbon atoms in the alkyl radicals,
$R^4$ is hydrogen or alkyl having 1 to 4 carbon atoms, the two radicals $R^3$ and $R^4$ being para to each other if they have a meaning other than hydrogen,
$R^5$ is hydrogen or a radical

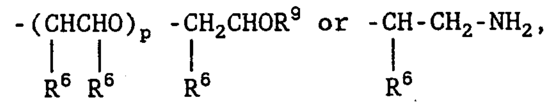

or

| | |
|---|---|
| $R^6$ | is hydrogen or alkyl having 1 or 2 carbon atoms, |
| $R^7$ | is hydrogen, alkyl having 1 to 6 carbon atoms or a radical |

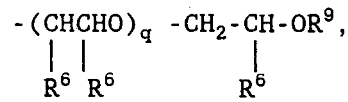

| | |
|---|---|
| $R^8$ | is hydrogen, $C_1$-$C_4$alkyl or $C_1$-$C_4$hydroxyalkyl, |
| $R^9$ | is hydrogen or $C_1$-$C_4$alkyl, |
| $R^{11}$ | is hydrogen, sulfo or carboxyl, |
| $R^{12}$ | is hydrogen, sulfo, carboxyl, chlorine, methyl, methoxy, ethoxy, acetylamino, ethylcarbonylamino, ethoxycarbonyl or hydroxyethoxycarbonyl, |
| p and q | are each 0 or 1 and |
| M | is hydrogen or one equivalent of a colourless cation. |

**17.** A dye according to claim 16, wherein $R^1$ is hydrogen, methyl or methoxy, $R^2$ is hydrogen or methyl, $R^3$ and $R^4$ are each independently of the other hydrogen, methyl, methoxy or ethoxy, $R^5$ is hydrogen or hydroxyethyl, $R^7$ is methyl, ethyl, hydroxyethyl or hydroxyethoxyethyl, $R^8$ is hydrogen, methyl, ethyl or hydroxyethyl, $R^9$ is hydrogen, $R^{11}$ is hydrogen, sulfo or carboxyl, $R^{12}$ is hydrogen or methyl, and M is $Na^{\oplus}$, $Li^{\oplus}$ or protonated $C_4$-$C_6$alkanolamine.

**18.** A process for the preparation of a disazo dye of formula (1) according to claim 1, which comprises reacting a cyanuric halide with a compound of formula

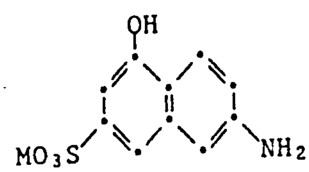

(3),

a compound of formula

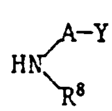

(4),

and a compound of formula

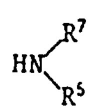

(5),

with either the compound (3) or one of the reaction products containing the compound (3) being coupled with a diazotised amine of formula

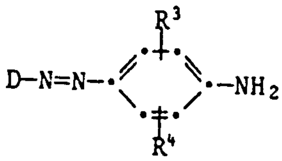 (6),

M, A, Y, $R^8$, $R^7$, $R^5$, D, $R^3$ and $R^4$ being as defined for formula (1).

**19.** A process according to claim 18, which comprises reacting cyanuric chloride first with an amine of formula (3), then with an amine of formula (4) and finally with an amine of formula (5), and then coupling the resulting product with a diazotised amine of formula (6), carrying out all these reactions without isolation of the intermediates.

**20.** The use of a compound of formula (1) according to claim 1 as a dye for dyeing and printing textile materials, paper, leather and for the preparation of inks.

**21.** The use according to claim 20 for dyeing and printing paper of all kinds.

**22.** Paper dyed with a dye of formula (1) according to claim 1.

**Revendications**

**1.**

**2.** Colorants disazoïques de formule

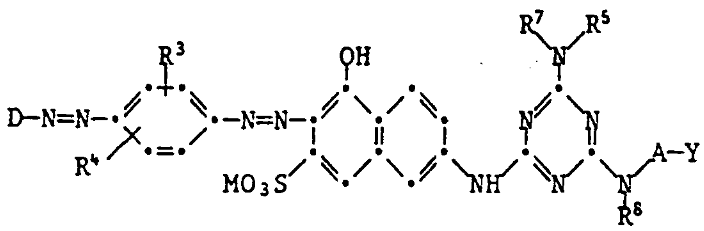 (1)

dans laquelle

| | |
|---|---|
| D | représente un radical de formule |

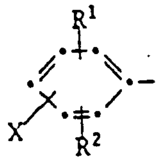 ou 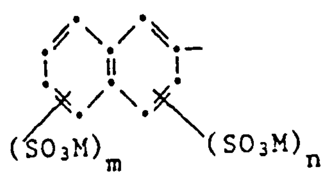 ,

(a) (b)

| | |
|---|---|
| X | représente -COOM ou $-SO_3M$; |
| $R^1$ et $R^2$ | représentent chacun, indépendamment l'un de l'autre, un atome d'hydrogène ou d'halogène ou un groupe alkyle ou alcoxy ayant chacun de 1 à 4 atomes de carbone dans les restes alkyle; |
| m | vaut 0, 1 ou 2; |
| n | vaut 0 ou 1 et |
| la somme m + n | vaut 1 ou 2, deux groupes sulfo se trouvant sur le même cycle n'étant pas en position ortho l'un par rapport à l'autre; |

$R^3$ représente un atome d'hydrogène ou un groupe alkyle ou alcoxy ayant chacun de 1 à 4 atomes de carbone dans les restes alkyle;

$R^4$ représente un atome d'hydrogène ou un groupe alkyle ayant de 1 à 4 atomes de carbone, les deux radicaux $R^3$ et $R^4$, lorsqu'ils ont une autre signification que celle d'un atome d'hydrogène, étant en position para l'un par rapport à l'autre;

$R^5$ représente un atome d'hydrogène, un radical

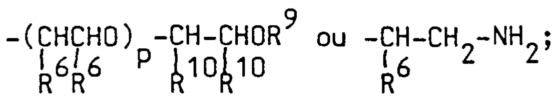

$R^6$ et $R^{10}$ étant chacun, indépendamment l'un de l'autre, un atome d'hydrogène ou un groupe alkyle ayant 1 ou 2 atomes de carbone, mais un radical $R^6$ et un radical $R^{10}$ devant être des atomes d'hydrogène;

$R^7$ est un atome d'hydrogène ou un groupe alkyle ayant de 1 à 6 atomes de carbone, ou un radical

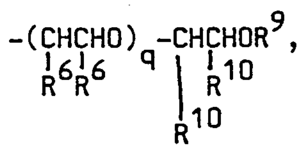

ou

$R^5$ et $R^7$ forment, conjointement avec l'atome de N qui les relie, un radical pyrrolidino, pipéridino, morpholino ou pipérazino qui est éventuellement substitué, sur l'atome de N non lié au cycle triazine, par un groupe alkyle en $C_1$-$C_4$ ou hydroxyalkyle en $C_1$-$C_4$ ou alcoxy($C_1$-$C_4$)-alkyle($C_1$-$C_4$);

$R^8$ représente un atome d'hydrogène ou un groupe alkyle en $C_1$-$C_4$ ou hydroxyalkyle en $C_1$-$C_4$ ou alcoxy($C_1$-$C_4$)alkyle($C_1$-$C_4$);

$R^9$ représente un atome d'hydrogène ou un groupe alkyle en $C_1$-$C_4$;

A représente une liaison directe ou un radical alkylène en $C_1$-$C_6$ à chaîne droite ou ramifiée;

Y représente un radical phényle ou naphtyle, les radicaux phényle et naphtyle n'étant pas substitués ou étant substitués par des substituants sulfo, carboxyle, halogène, alkyle en $C_1$-$C_4$, alcoxy en $C_1$-$C_4$, alkyl($C_1$-$C_4$)carbonylamino, alkyloxy($C_1$-$C_4$)carbonyle ou hydroxyalkyloxy($C_1$-$C_4$)-carbonyle;

p et q valent chacun, indépendamment l'un de l'autre, 0 ou un nombre entier valant au maximum 3; et

M représente un atome d'hydrogène ou un équivalent d'un cation incolore.

**3.** Colorants selon la revendication 1, caractérisés en ce que D représente un radical de formule (a).

**4.** Colorants selon la revendication 2, caractérisés en ce que $R^1$ représente un atome d'hydrogène ou de chlore ou le groupe méthyle, méthoxy ou éthoxy.

**5.** Colorants selon la revendication 3, caractérisés en ce que $R^1$ représente un atome d'hydrogène ou le groupe méthyle ou méthoxy.

**6.** Colorants selon l'une des revendications 1 à 4, caractérisés en ce que $R^2$ représente un atome d'hydrogène ou de chlore ou le groupe méthyle.

**7.** Colorants selon l'une des revendications 1 à 5, caractérisés en ce que X représente le groupe sulfo.

**8.** Colorants selon l'une des revendications 1 à 6, caractérisés en ce que $R^3$ et $R^4$ représentent chacun, indépendamment l'un de l'autre, un atome d'hydrogène ou le groupe méthyle, méthoxy ou éthoxy, en

particulier un atome d'hydrogène.

**9.** Colorants selon l'une des revendications 1 à 7, caractérisés en ce que $R^5$ représente $-CH_2-CH_2-OH$ ou un atome d'hydrogène.

**10.** Colorants selon l'une des revendications 1 à 8, caractérisés en ce que $R^7$ représente un groupe alkyle en $C_1-C_2$, un atome d'hydrogène ou un radical

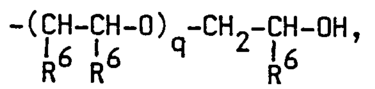

q valant 1 ou surtout 0, et $R^6$ représentant le groupe méthyle ou en particulier un atome d'hydrogène.

**11.** Colorants selon l'une des revendications 1 à 9, dans lesquels $R^8$ représente un atome d'hydrogène ou le groupe méthyle, éthyle ou hydroxyéthyle.

**12.** Colorants selon l'une des revendications 1 à 10, caractérisés en ce que A représente le groupe méthylène ou éthylène.

**13.** Colorants selon l'une des revendications 1 à 10, caractérisés en ce que A représente la liaison directe.

**14.** Colorants selon l'une des revendications 1 à 12, caractérisés en ce que Y représente un radical naphtyle qui porte un ou deux groupes sulfo, ou un radical phényle non substitué ou substitué par des substituants sulfo, carboxyle, chlore, méthyle, méthoxy, éthoxy, acétylamino, éthylcarbonylamino, éthoxycarbonyle ou hydroxyéthoxycarbonyle.

**15.** Colorants selon la revendication 13, caractérisés en ce que Y représente un radical phényle non substitué ou substitué par le groupe méthyle, sulfo ou carboxyle.

**16.** Colorants selon l'une des revendications 1 à 14, caractérisés en ce que M représente $Na^{\oplus}$, $Li^{\oplus}$ ou une alcanolamine en $C_4-C_6$ protonée.

**17.** Colorants selon la revendication 1, de formule

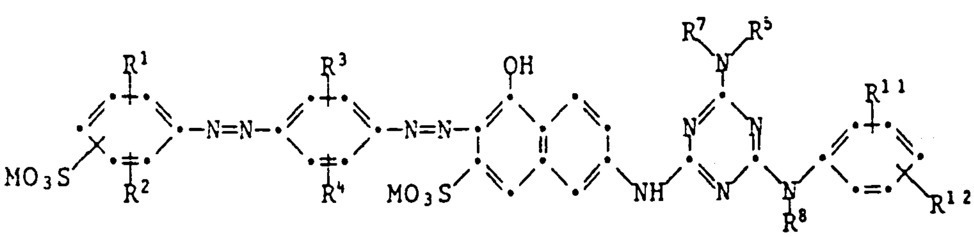

(2)

dans laquelle

- $R^1$ et $R^2$ représentent chacun, indépendamment l'un de l'autre, un atome d'hydrogène ou d'halogène ou un groupe alkyle ou alcoxy ayant chacun de 1 à 4 atomes de carbone dans les restes alkyle;
- $R^3$ représente un atome d'hydrogène ou un groupe alkyle ou alcoxy ayant chacun de 1 à 4 atomes de carbone dans les restes alkyle;
- $R^4$ représente un atome d'hydrogène ou un groupe alkyle ayant de 1 à 4 atomes de carbone, les deux radicaux $R^3$ et $R^4$, lorsqu'ils ont une autre signification que celle d'un atome d'hydrogène, étant en position para l'un par rapport à l'autre;
- $R^5$ représente un atome d'hydrogène ou un radical

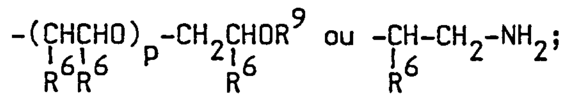

| | |
|---|---|
| $R^6$ | représente un atome d'hydrogène ou un groupe alkyle ayant 1 ou 2 atomes de carbone; |
| $R^7$ | représente un atome d'hydrogène ou un groupe alkyle ayant de 1 à 6 atomes de carbone, ou un radical |

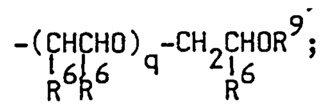

| | |
|---|---|
| $R^8$ | représente un atome d'hydrogène ou un groupe alkyle en $C_1$-$C_4$ ou hydroxyalkyle en $C_1$-$C_4$; |
| $R^9$ | représente un atome d'hydrogène ou un groupe alkyle en $C_1$-$C_4$; |
| $R^{11}$ | représente un atome d'hydrogène ou le groupe sulfo ou carboxyle; |
| $R^{12}$ | représente un atome d'hydrogène ou de chlore, ou le groupe sulfo, carboxyle, méthyle, méthoxy, éthoxy, acétylamino, éthylcarbonylamino, éthoxycarbonyle ou hydroxyéthoxycarbonyle; |
| p et q | valent chacun 0 ou 1, et |
| M | représente un atome d'hydrogène ou un équivalent d'un cation incolore. |

**18.** Colorants selon la revendication 16, caractérisés en ce que $R^1$ représente un atome d'hydrogène ou le groupe méthyle ou méthoxy, $R^2$ représente un atome d'hydrogène ou le groupe méthyle, $R^3$ et $R^4$ représentent chacun, indépendamment l'un de l'autre, un atome d'hydrogène ou le groupe méthyle, méthoxy ou éthoxy, $R^5$ représente un atome d'hydrogène ou le groupe hydroxyéthyle, $R^7$ représente le groupe méthyle, éthyle, hydroxyéthyle ou hydroxyéthoxyéthyle, $R^8$ représente un atome d'hydrogène ou le groupe méthyle, éthyle ou hydroxyéthyle, $R^9$ représente un atome d'hydrogène, $R^{11}$ représente un atome d'hydrogène ou le groupe sulfo ou carboxyle, $R^{12}$ représente un atome d'hydrogène ou le groupe méthyle, et M représente $Na^+$, $Li^+$ ou une alcanolamine en $C_4$-$C_6$ protonée.

**19.** Procédé pour la préparation de colorants disazoïques de formule (1) selon la revendication 1, caractérisé en ce que l'on fait réagir un halogénure de cyanuryle avec un composé de formule

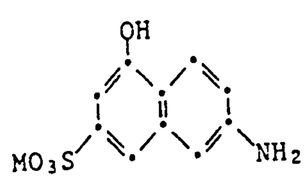

(3)

un composé de formule,

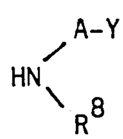

(4)

et un composé de formule

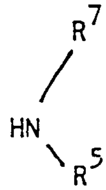

(5)

et on fait copuler soit le composé (3), soit l'un des produits de réaction qui contient le composé (3), avec une amine diazotée de formule

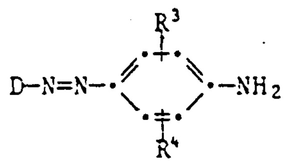

(6)

M, A, Y, $R^8$, $R^7$, $R^5$, D, $R^3$ et $R^4$ ayant les significations données sous la formule (1).

**20.** Procédé selon la revendication 18, caractérisé en ce que l'on fait d'abord réagir du chlorure de cyanuryle avec une amine de formule (3), puis avec une amine de formule (4) et enfin avec une amine de formule (5) et après cela on fait copuler le produit obtenu avec une amine diazotée de formule (6), toutes ces réactions étant effectuées sans isolement des produits intermédiaires.

**21.** Utilisation des composés de formule (1) selon la revendication 1, en tant que colorants pour la teinture et l'impression de matériaux textiles et du cuir, la coloration et l'impression du papier et pour la préparation d'encres.

**22.** Utilisation selon la revendication 20, pour la coloration et l'impression de papiers de toutes sortes.

**23.** Le papier coloré avec des colorants de formule (1) selon la revendication 1.